# EUROPÄISCHE PATENTSCHRIFT

(11) **EP 4 105 017 B1**
(45) Veröffentlichungstag und Bekanntmachung des Hinweises auf die Patenterteilung: **07.06.2023**
(21) Anmeldenummer: 21180015.6
(22) Anmeldetag: 17.06.2021
(51) Int. Cl.: B32B 9/00, B32B 9/04, B32B 27/40, B32B 27/42, B32B 33/00, B32B 37/00, C04B 41/72, E04F 13/077

(54) **DÜNNSTEINERZEUGNIS**
THIN STONE PRODUCT
PRODUIT EN PIERRE FINE

(43) Veröffentlichungstag der Anmeldung: 21.12.2022
(73) Patentinhaber: Schiefergruben Magog GmbH & Co. KG, 57392 Schmallenberg (DE)
(72) Erfinder: GUNTERMANN, Georg, 57392 Schmallenberg (DE)
(74) Vertreter: Michalski Hüttermann & Partner Patentanwälte mbB

(56) Entgegenhaltungen:
- EP-A1- 2 930 018
- EP-A1- 3 785 900
- DE-A1-102008 008 659
- DATABASE WPI Week 201153 Thomson Scientific, London, GB; AN 2011-J85785 XP002804702, & CN 102 108 772 A (HUANG G) 29. Juni 2011 (2011-06-29)

## Beschreibung

Die Erfindung betrifft ein biegsames Dünnsteinerzeugnis, ein Verfahren zu dessen Herstellung sowie dessen Verwendung.

Schiefer ist ein Steinmaterial, das gerne in der Dachdeckung aber auch als Oberfläche in Wohnräumen (z.B. Fußboden, Wand, Decke, Tischplatte, ...) eingesetzt wird. Ein wesentlicher Nachteil ist sein Gewicht. Weiterhin ist es nicht einfach, möglichst gleichartige große Schieferplatten für diese Einsatzzwecke im Schieferbergbau zu gewinnen.

Bisher gibt es nur sehr wenige Lösungsansätze, um Schiefer oder auch andere Steinarten in einem Produkt möglichst dünn und damit leicht und besser verarbeitbar bereitzustellen.

DE202006019074U1, DE102011078690A1 und JP11336293A beschreiben Schiefer auf Polymersubstraten. Keines dieser Produkte konnte sich bisher am Markt durchsetzen.

EP3785900A1 beschreibt ein Dünnsteinerzeugnis.

EP2930018A1 beschreibt eine Verbundplatte und ein Verfahren zu deren Herstellung.

DE102008008659A1 beschreibt einen Verbundwerkstoff mit einer Steinschicht.

CN102108772A beschreibt eine ultradünne Steinverbundplatte und Verfahren zu ihrer Herstellung.

Die Aufgabe der vorliegenden Erfindung besteht darin, eine Technologie bereitzustellen, um Stein wie beispielsweise Schiefer mit geringem Gewicht, guter Verarbeitbarkeit und guter Biegsamkeit bereitzustellen.

Diese Aufgabe wird in einer ersten Ausführungsform durch ein biegsames Dünnsteinerzeugnis mit einer außenliegenden Steinschicht gelöst, die eine Dicke im Median in einem Bereich von 2 bis 600 µm aufweist, und einer daran angrenzenden Polymerschicht, wobei die Rautiefe Rz der Oberfläche der Steinschicht gemessen nach DIN EN ISO 4287 in einem Bereich von 2 bis 2000 µm liegt, wobei der Stein Druckschiefer, Massenschiefer, Glimmerschiefer, Quarzit, Sandstein oder Marmor ist.

Die Rautiefe wird gemäß DIN EN ISO 4287 gemessen werden. Die Rautiefe kann beispielsweise mit einem 3D Profilometer (z.B. 3D-Profilometer VR-5000 der Firma Keyence) gemessen werden. Eine definierte Messstrecke auf der Oberfläche des Werkstücks wird beispielsweise in sieben Einzelmessstrecken eingeteilt, wobei die mittleren fünf Messstrecken gleich groß sind. Die Auswertung erfolgt beispielsweise nur über diese fünf Messstrecken, da der anzuwendende Gauß-Filter eine halbe Einzelmessstrecke Vor- bzw. Nachlauf benötigt beziehungsweise eine Faltung ein nicht zu vernachlässigendes Ein- und Auslaufverhalten aufweist. Von jeder dieser Einzelmessstrecken des Profils wird beispielsweise die Differenz aus maximalem und minimalem Wert ermittelt. Aus den somit erhaltenen fünf Einzelrautiefen wird beispielsweise der Mittelwert der Rautiefe Rz gebildet.

Es hat sich herausgestellt, dass bei der Herstellung des Dünnsteinerzeugnisses die Polymerschicht oder auch die Steinschicht beim Abziehen von der Steinoberfläche abreißen oder einreißen kann, wenn die Rautiefe Rz größer als 2 mm ist. Dies führt dann zu Ausschuss in der Produktion und muss vermieden werden. Gerade bei Schiefer kommt es häufig vor, dass einzelne kleine Bereiche der Oberfläche starke Abweichungen von weit über 2 mm von der mittleren Oberfläche haben können. Werden diese Bereiche vor der Herstellung des erfindungsgemäßen Dünnsteinerzeugnisses nicht eingeebnet, so kann es an diesen Stellen leicht zu Fehlern durch Abriss der Polymer- oder der Steinschicht kommen. Diesem Problem haben sich die Erfinder erstmals angenommen.

Andererseits gibt es beispielsweise auch poliertes Gestein (wie beispielsweise Schiefer), der typischerweise eine Rautiefe Rz von < 20 µm aufweist. Diese Steinoberfläche ist erfindungsgemäß unerwünscht, da der optische Eindruck von Naturstein wie beispielsweise Naturschiefer erzeugt werden soll.

Das resultierende erfindungsgemäße Dünnsteinerzeugnis hat also eine Rautiefe der Oberfläche der Steinschicht Rz in einem Bereich von 2 bis 2000 µm. Vorzugsweise liegt diese Rautiefe Rz in einem Bereich von 5 bis 1000 µm, ganz besonders bevorzugt in einem Bereich von 6 bis 300 µm. Die Rautiefe des erfindungsgemäßen Dünnsteinerzeugnisses liegt damit auch außerhalb der üblichen Rautiefen von beispielsweise Schiefer.

Die Rauheit Ra der Oberfläche der Steinschicht liegt vorzugsweise in einem Bereich von 50 bis 1000 µm, besonders bevorzugt in einem Bereich von 60 bis 300 µm. Die Rauheit Ra kann beispielsweise gemäß DIN EN ISO 25178 gemessen werden. Die Rauheit kann beispielsweise mit einem 3D Profilometer (z.B. 3D-Profilometer VR-5000 der Firma Keyence) gemessen werden.

### Dünnsteinerzeugnis

Vorzugsweise weist das Dünnsteinerzeugnis im Median eine Dicke in einem Bereich von 0,08 bis 3 mm, besonders bevorzugt im Median in einem Bereich von 0,4 bis 0,8 mm auf. Die Dicke ist über das Dünnsteinerzeugnis möglichst gleichbleibend, um das Dünnsteinerzeugnis besser verarbeiten und lagern zu können. Daher liegt die Standardabweichung der Dicke des Dünnsteinerzeugnisses vorzugsweise in einem Bereich von 0,005 bis 0,2 mm, besonders bevorzugt in einem Bereich von 0,05 bis 0,15 mm.

Vorzugsweise ist das Dünnsteinerzeugnis rollbar. Vorzugsweise liegt der Mindestbiegeradius des Dünnsteinerzeugnisses in einem Bereich von 1 bis 200 mm, ganz besonders bevorzugt in einem Bereich von 3 bis 50 mm. Dadurch lässt sich das Dünnsteinerzeugnis auch für gebogene und dreidimensionale Erzeugnisse/Anwendungen einsetzten und besonders leicht verpacken und transportieren. Der Mindestbiegeradius im Sinne der Erfindung ist definiert als der minimale Biegeradius, der beim Rollen des Dünnsteinerzeugnisses erzielt werden kann, ohne dass das Produkt Schaden nimmt (wie z.B. Abplatzungen oder Risse).

Vorzugsweise ist das Dünnsteinerzeugnis nicht lichtdurchlässig. Alternativ kann das Dünnsteinerzeugnis aber für bestimmte Anwendungen wie beispielsweise im Automobilbereich oder auch im Bereich der Beleuchtung lichtdurchlässig, insbesondere transluzent, sein. Die Transmission des Dünnsteinerzeugnisses liegt vorzugsweise in einem Bereich von 0 bis 50%. Die Transmission kann beispielsweise gemäß ISO 13468 (Lichtart D 65) gemessen werden.

Das Flächengewicht des Dünnsteinerzeugnisses liegt vorzugsweise in einem Bereich von 0,6 bis 1,7 kg/m², ganz besonders bevorzugt in einem Bereich von 0,7 bis 1,3 kg/m². Bisherige Erzeugnisse waren in der Regel wesentlich schwerer und damit beispielsweise aufwändiger zu verarbeiten und zu transportieren.

Die Rückseite des Dünnsteinerzeugnisses ist vorzugsweise glatt. Die Rückseite des Dünnsteinerzeugnisses weist auf ihrer Oberfläche vorzugsweise ein Polymer auf. Die Rückseite des Dünnsteinerzeugnisses weist auf ihrer Oberfläche vorzugsweise keine Fasern (beispielsweise Gelege, Gewebe oder Vlies) auf. Für bestimmte Anwendungen wie beispielsweise im Innenraum eines Automobils kann die Rückseite auch sehr glatt sein. Die Rückseite kann auch geschliffen sein.

Die Rauheit Ra der Oberfläche der Rückseite des Dünnsteinerzeugnisses liegt vorzugsweise in einem Bereich von 5 bis 100 µm, besonders bevorzugt in einem Bereich von 5 bis 50 µm. Die Rauheit Ra kann beispielsweise gemäß DIN EN ISO 25178 gemessen werden. Die Rauheit kann beispielsweise mit einem 3D Profilometer (z.B. 3D-Profilometer VR-5000 der Firma Keyence) gemessen werden.

Die Oberflächenspannung der Oberfläche der Rückseite des Dünnsteinerzeugnisses liegt vorzugsweise in einem Bereich von 10 bis 40 mN/m, ganz besonders bevorzugt in einem Bereich von 20 bis 30 mN/m. Dadurch kann besonders gut eine gute Verklebbarkeit des Dünnsteinerzeugnisses erzielt werden. Die Oberflächenspannung kann beispielsweise mit Testtinte ermittelt werden.

Vorzugsweise liegt die Fläche der Steinschicht auf der Vorderseite des Dünnsteinerzeugnisses in einem Bereich von 0,2 bis 6 m², ganz besonders bevorzugt in einem Bereich von 1 bis 3,5 m². Dadurch können beispielsweise auch größere Fassaden ohne großen Aufwand mit Stein wie beispielsweise Schiefer verkleidet werden.

Das Dünnsteinerzeugnis kann auch auf einem Träger angeordnet sein. Das Material des Trägers kann beispielsweise Stahl, Kunststoff, Multiplex beziehungsweise Sperrholz, Faserzement, Aluminium, Glasschaum, Holzfaserzement und/oder Glas sein. Der Träger kann als Platte ausgebildet sein. Der Träger kann eine Dicke in einem Bereich von 0,1 bis 10 cm aufweisen.

Vorzugsweise ist das Dünnsteinerzeugnis frostsicher. Dadurch sind auch Außenanwendungen möglich.

Vorzugsweise erfüllt das Dünnsteinerzeugnis (gegebenenfalls auf einem Träger wie einer Faserzementplatte) die Brandklasse B1 nach DIN 4102, besonders bevorzugt die Brandklasse A2 (-s1,d0 oder B-s1,d0) nach DIN EN 13501-1 2010. Dadurch kann das Dünnsteinerzeugnis beispielsweise auch auf Außenfassaden eingesetzt werden. Dazu enthält die Polymerschicht vorzugsweise wenigstens 40 Gew.% Füllstoffe, die bei Erhitzen Wasser abgeben (wie beispielsweise Metallhydroxide, z.B. Aluminiumhydroxid) oder auch Perlit.

Das Dünnsteinerzeugnis weist beispielsweise auf der der Steinschicht gegenüberliegenden Seite keine Klebeschicht auf, um das Dünnsteinerzeugnis auf einem Untergrund zu befestigen. Dies hat den Vorteil, dass die Gesamtdicke des Dünnsteinerzeugnisses geringer sein kann. Alternativ kann aber eine Klebeschicht vorgesehen sein.

Auf der Steinschicht ist vorzugsweise keine Metallschicht angeordnet. Dies hat den Vorteil, dass das Dünnsteinerzeugnis dann nicht leitfähig ist und leichter elektrostatisch auf Oberflächen aufgebracht werden kann.

Vorzugsweise ist das Dünnsteinerzeugnis wechseltemperaturbeständig. Die Wechseltemperaturprüfung kann beispielsweise mit einem Temperaturzyklus von -20°C bis +80 °C gemäß DIN EN 12467 durchgeführt werden.

Vorzugsweise ist das Dünnsteinerzeugnis UV-lichtbeständig.

Vorzugsweise ist das Dünnsteinerzeugnis chemikalienbeständig. Die Chemikalienbeständigkeit kann gemäß DIN 68861 (EN 12720) 1B gemessen werden.

Vorzugsweise ist das Dünnsteinerzeugnis feuchtigkeitsundurchlässig. Die Feuchtigkeitsundurchlässigkeit kann gemäß DIN EN 12467 gemessen werden.

Vorzugsweise ist das Dünnsteinerzeugnis von -40 °C bis 110 °C temperaturbeständig. Die Temperaturbeständigkeit kann gemäß DIN EN 12467 gemessen werden.

Vorzugsweise ist das Dünnsteinerzeugnis frostbeständig. Die Frostbeständigkeit kann mit der Frost-Tauwechselprüfung gemäß DIN EN 12467 gemessen werden.

Vorzugsweise ist das Dünnsteinerzeugnis überlackierbar.

### Steinschicht

Der Stein ist Druckschiefer (beispielsweise Dachschiefer), Massenschiefer (beispielsweise Buntschiefer), Glimmerschiefer, Quarzit, Sandstein oder Marmor. Besonders bevorzugt ist der Stein ein Druckschiefer.

Vorzugsweise ist die Steinschicht eine Schieferschicht. Die Schieferschicht besteht vorzugsweise nicht aus Parallelschiefer und besonders bevorzugt aus Druckschiefer bzw. Dachschiefer. Vorzugsweise liegt der Winkel zwischen Schieferung und Schichtung in einem Bereich von 2 bis 90°, besonders bevorzugt in einem Bereich von 5 bis 30°. Vorzugsweise wird auch kein Glimmerschiefer oder Buntschiefer eingesetzt. Dadurch ist das Dünnsteinerzeugnis besonders frostsicher. Dachschiefer hat darüber hinaus den Vorteil, dass dieser eine wesentlich gleichmäßigere Schieferung hat und Fehlstellen im Endprodukt so besser vermieden werden können. Bei Druckschiefer oder Dachschiefer sorgen die vernetzen Glimmerlagen für eine bessere Witterungsbeständigkeit. Die Herausforderung bei der Erstellung von Furnieren aus Druckschiefern ist das Loslösen der vernetzten Glimmerlagen aus der Struktur des Schiefers. Durch das erfindungsgemäße Verfahren ist dies aber möglich.

Vorzugsweise liegt der Median der Schichtdicke der Steinschicht des Dünnsteinerzeugnisses in einem Bereich 2 bis 200 µm, bevorzugt in einem Bereich von 5 bis 100 µm, ganz besonders bevorzugt in einem Bereich von 33 bis 80 µm. Vorzugsweise liegt die absolute Dicke der Schichtdicke der Steinschicht an jeder Stelle des Dünnsteinerzeugnisses in einem Bereich von 2 bis 600 µm. Der Median der Schichtdicke der Steinschicht kann beispielsweise über eine Messstrecke von 100 cm und 20 auf dieser Strecke gleichmäßig verteilten Messpunkten ermittelt werden. Die Steinschicht kann beispielsweise an einigen Stellen nur 10 µm und an anderen Stellen beispielsweise bis zu 450 µm dick sein.

Vorzugsweise liegt die Standardabweichung der Schichtdicke der Steinschicht in einem Bereich von 2 bis 70 µm.

Vorzugsweise erfüllt der Schiefer der Steinschicht die Anforderungen der Norm DIN EN12326.

Die Wasseraufnahme des Steins bzw. der Steinschicht liegt vorzugsweise bis zu 0,6 Gew.%. Dadurch hat das Dünnsteinerzeugnis eine besonders hohe Frost-Tau-Wechselbeständigkeit.

### Polymerschicht

Die Polymerschicht kann eine einzelne Polymerschicht sein. Sie kann aber auch aus mehreren Teilschichten bestehen. Die Teilpolymerschichten können beispielsweise durch Grenzflächen abgetrennt sein. Diese Grenzflächen können dadurch entstehen, dass beispielsweise zunächst eine Teilpolymerschicht aufgetragen wird und dann zumindest teilweise ausgehärtet wird. Erst anschließend kann dann beispielsweise eine weitere Teilpolymerschicht aufgetragen werden, wodurch dann die Grenzfläche entsteht. Dies hat den Vorteil, dass ein etwaiges Fasergebilde beispielsweise auf eine erste zumindest teilweise ausgehärtete Teilpolymerschicht aufgelegt werden kann und dann erst eine weitere Teilpolymerschicht aufgetragen wird, womit verhindert werden kann, dass ein etwaiges Fasergebilde direkt mit der Steinschicht in Kontakt kommt.

Die Polymerschicht beziehungsweise das nicht ausgehärtete Polymerharz enthält vorzugsweise 50 bis 100 Gew.% Polyasparaginsäureester (auch Polyaspartics genannt), Polyharnstoff, Polyurethan, und/oder Mischungen derselben. Die Polymerschicht beziehungsweise das nicht ausgehärtete Polymerharz enthält vorzugsweise jedenfalls Polyasparaginsäureester und/oder Polyharnstoff. Dies schließt beispielsweise auch Hybridsysteme ein. Dies können Mischungen sein. Im Fall von Polyharnstoff kann eine Hybridvariante aus Isocyanat und einer Polyol-Amin-Mischung bestehen. Im Falle des nicht ausgehärteten Polymerharzes kann es sich auch um die Vorstufen (z.B. die entsprechenden Monomere) handeln.

Polyasparaginsäureester sind sterisch gehinderte sekundäre Amine, die langsamer mit Isocyanaten reagieren als primäre Amine. Es wird angenommen, dass die kontrollierte Reaktivität von Polyasparaginsäureestern auf die sterisch gehinderte Umgebung der sekundären Amingruppen zurückzuführen ist, die sich in einer Beta-Position relativ zu einem Estercarbonyl befinden, sowie auf die potenzielle Wasserstoffbrückenbindung zwischen den sekundären Amingruppen und dem Estercarbonyl. Polyasparaginsäureester können durch die Michael-Additionsreaktion von Polyaminen mit Dialkylmaleat hergestellt werden. Wie Polyasparaginsäureester sind auch Polyetherasparaginsäureester sterisch gehinderte sekundäre Polyamine. Polyetherasparaginsäureester können durch die Michael-Additionsreaktion von Polyetheraminen mit Dialkylmaleat hergestellt werden.

Die vorliegenden Erfinder haben unerwartet entdeckt, dass die Zugabe von Polyetherasparaginsäureestern zu einer Bindemittelkomponente eines Zweikomponenten-Polyharnstoff-Beschichtungssystems (wobei die Bindemittelkomponente auch Polyasparaginsäureester enthält) die Aushärtungsgeschwindigkeit (gemessen als Durchtrocknungszeit der Stufe D gemäß ASTM D5895-03, Methode B) eines Beschichtungsfilms erhöht, der mit einer Isocyanat-Härterkomponente vernetzt wird, dass aber die Zugabe der Polyetherasparaginsäureester die Topfzeit der gemischten Beschichtungszusammensetzung (gemessen als zeitabhängige Viskosität) nicht verringert.

Wie hier verwendet, bezieht sich der Begriff "Topfzeit" auf den Zeitraum von der anfänglichen Mischung von zwei oder mehr miteinander reaktiven Komponenten eines Beschichtungssystems bis zu dem Punkt, an dem die resultierende Beschichtungszusammensetzung eine verarbeitbare Viskosität aufweist. Wie hierin verwendet, bezieht sich der Begriff "Aushärtungszeit" auf die Zeit bis zum Erreichen der Stufe D (Methode B) gemäß der Definition in ASTM D5895-03 (2008)-Standard Test Methods for Evaluating Drying or Curing During Film Formation of Organic Coatings Using Mechanical Recorder, die durch Bezugnahme in diese Spezifikation aufgenommen wird. Ebenso bezieht sich der Begriff "ausgehärtet" auf den Zustand einer flüssigen Beschichtungszusammensetzung, in dem ein aus der Beschichtungszusammensetzung gebildeter Film die Stufe D gemäß der Definition in ASTM D5895-03 (2008) erreicht. Wie hierin verwendet, beziehen sich die Begriffe "Aushärtung" auf die Entwicklung einer flüssigen Beschichtungszusammensetzung vom flüssigen Zustand zu einem ausgehärteten Zustand. Ein Trocknungszustand der Stufe D, wie in ASTM D 5895-03 definiert, ist gleichbedeutend mit einem "Durchtrocknungszustand".

Wie hier verwendet, bezieht sich der Begriff "Isocyanat" auf Verbindungen, die mindestens zwei nicht umgesetzte Isocyanatgruppen enthalten. Isocyanate können beispielsweise Diisocyanate und Diisocyanat-Reaktionsprodukte, die z. B. Biuret, Isocyanurat, Uretdion, Urethan, Harnstoff, Iminooxadiazindion, Oxadrazintrion, Carbodiimid, Acylharnstoff, Allophanatgruppen und Kombinationen davon umfassen. Wie hier verwendet, bezieht sich der Begriff "Amin" auf Verbindungen, die mindestens zwei freie primäre und/oder sekundäre Amingruppen umfassen. Polyamine schließen Polymere ein, die mindestens zwei anhängende und/oder endständige Amingruppen umfassen.

Nicht einschränkende Beispiele für geeignete Isocyanate können monomere und/oder polymere Isocyanate umfassen. Die Polyisocyanate können aus Monomeren, Präpolymeren, Oligomeren oder Mischungen davon ausgewählt werden. In einer Ausführungsform kann das Polyisocyanat ein lineares, verzweigtes, zyklisches, aromatisches C2-C20-Isocyanat oder ein Gemisch davon sein. Die Isocyanatkomponente kann jedes der bekannten Isocyanate der Polyurethanchemie umfassen. Beispiele für geeignete Isocyanate mit niedrigerem Molekulargewicht (z.B., mit einem Molekulargewicht von 168 bis 300 g/mol) umfassen, sind aber nicht beschränkt auf 1,4-Tetramethylendiisocyanat; Methylpentamethylendiisocyanat; 1,6-Hexamethylendiisocyanat (HDI); 2,2,4-Trimethyl-1,6-hexamethylendiisocyanat; 1,12-Dodecamethylendiisocyanat; Cyclohexan-1,3- und -1,4-diisocyanat; 1-lsocyanato-2-isocyanatomethylcyclopentan; 1-Isocyanato-3-isocyanatomethyl-3,5,5-trimethyl-cyclohexan (Isophorondiisocyanat oder IPDI); Bis-(4-isocyanato-cyclohexyl)-methan; 1,3- und 1,4-Bis-(isocyanatomethyl)-cyclohexan; Bis-(4-isocyanatocyclo-hexyl)-methan; 2,4'-Diisocyanato-dicyclohexylmethan; Bis-(4-isocyanato-3-methyl-cyclohexyl)-methan; α,α,α',α'-Tetramethyl-1,3- und/oder -1,4-Xylylendiisocyanat; 1-Isocyanato-1-methyl-4(3)-isocyanatomethyl, Cyclohexan; 2,4- und/oder 2,6-Hexahydro-Toluylendiisocyanat; 1,3- und/oder 1,4-Phenylendiisocyanat; 2,4- und/oder 2,6-Toluylendiisocyanat; 2,4- und/oder 4,4'-Diphenylmethandiisocyanat (MDI); 1,5-Diisocyanato-Naphthalin; und Kombinationen davon.

Beispiele für geeignete Polyasparaginsäureester umfassen die Polyasparaginsäureester, die in U.S. Patentnummern 5,126,170; 5,236,741; 5,489,704; 5,243,012; 5,736,604; 6,458,293; 6,833,424; 7,169,876; und in der US-Patentveröffentlichung Nr. 2006/0247371, beschrieben sind, die durch Bezugnahme in diese Beschreibung aufgenommen sind. Darüber hinaus sind geeignete Polyasparaginsäureester kommerziell beispielsweise von Bayer MaterialScience unter den Handelsnamen Desmophen NH 1220, Desmophen NH 1420, Desmophen NH 1520 und Desmophen NH 1521 erhältlich.

Der Polyharnstoff wird beispielsweise aus einer Reaktionsmischung gebildet, die Isocyanat und Amin enthält, wobei das Verhältnis der Äquivalente der Isocyanatgruppen zu den Äquivalenten der Amingruppen größer als 1 ist.

Geeignete Amine zur Verwendung in der vorliegenden Erfindung können aus einer Vielzahl von bekannten Aminen, wie z. B. primären und sekundären Aminen, und Mischungen davon ausgewählt werden. In alternativen Ausführungsformen kann das Amin Monoamine oder Polyamine mit mindestens zwei funktionellen Gruppen, wie Di-, Tri- oder höher funktionelle Amine, und Mischungen davon umfassen. In weiteren Ausführungsformen kann das Amin aromatisch oder aliphatisch sein, wie z. B. cycloaliphatisch, oder Mischungen davon. Nicht einschränkende Beispiele geeigneter Amine können aliphatische Polyamine umfassen, wie z. B., aber nicht beschränkt auf Ethylamin, isomere Propylamine, Butylamine, Pentylamine, Hexylamine, Cyclohexylamin, Ethylendiamin, 1,2-Diaminopropan, 1,4-Diaminobutan, 1,3-Diaminopentan, 1,6-Diaminohexan, 2-Methyl-1,5-pentandiamin, 2,5-Diamino-2,5-dimethylhexan, 2,2,4- und/oder 2,4,4-Trimethyl-1,6-diaminohexan, 1,11-Diaminoundecan, 1,12-Diaminododecan, 1, 3- und/oder 1,4-Cyclohexandiamin, 1-Amino-3,3,5-trimethyl-5-aminomethyl-cyclohexan, 2,4- und/oder 2,6-Hexahydrotoluoylendiamin, 2,4'- und/oder 4,4'-Diaminodicyclohexylmethan und 3,3'-Dialkyl-4,4'-diamino-dicyclohexylmethane (wie 3, 3'-Dimethyl-4,4'-diamino-dicyclohexylmethan und 3,3'-Diethyl-4,4'-diamino-dicyclohexylmethan), 2,4- und/oder 2,6-Diaminotoluol und 2,4'- und/oder 4,4'-Diaminodiphenylmethan, oder Mischungen davon.

Die Polymerschicht beziehungsweise das nicht ausgehärtete Polymerharz enthält vorzugsweise keinen Polyester. Polyester kann umweltschädlich sein und hat oft das Problem, dass unangenehm riechende Gase austreten.

Vorzugsweise liegt der Gehalt an Methacrylaten, Acrylaten, Polyestern, und/oder Polyethern und insbesondere ausgehärtetem Epoxidharz in einem Bereich von 0 bis 1 Gew.%. Besonders bevorzugt enthält die Polymerschicht keine Polyether. Vorzugsweise liegt der Gehalt an Styrol in einem Bereich von 0 bis 1 Gew.%. Besonders bevorzugt enthält die Polymerschicht kein Styrol. Vorzugsweise liegt der Gehalt an Lösungsmittel in einem Bereich von 0 bis 1 Gew.%. Besonders bevorzugt enthält die Polymerschicht kein Lösungsmittel. Vorzugsweise liegt der Gehalt an Wasser in einem Bereich von 0 bis 1 Gew.%. Besonders bevorzugt enthält die Polymerschicht kein Wasser. Die Teilpolymerschichten können aus unterschiedlichen Materialien bestehen. Vorzugsweise bestehen sie jedoch aus demselben Material.

Der Gehalt an Polyurethan kann in einem Bereich von 0 bis 80 Gew.% liegen. Alternativ bevorzugt kann der Gehalt von Polyurethan auch in einem Bereich von 0 bis 100 Gew.% liegen.

Besonders bevorzugt wird die Polymerschicht aus einem 2-Komponenten-Polyurethanklebstoff erhalten.

Vorzugsweise weist die Polymerschicht eine Dicke in einem Bereich von 0,08 bis 3 mm, besonders bevorzugt in einem Bereich von 0,4 bis 1 mm auf.

Die Polymerschicht kann wie oben dargestellt aus Teilpolymerschichten bestehen. Diese Teilpolymerschichten weisen vorzugsweise jeweils eine Dicke in einem Bereich von 0,08 bis 1 mm, besonders bevorzugt in einem Bereich von 0,15 bis 0,4 mm auf. Die erste an die Steinschicht angrenzende Teilpolymerschicht kann dicker als die übrigen Teilpolymerschichten sein. Alternativ kann die erste an die Steinschicht angrenzende Teilpolymerschicht auch dünner als die übrigen Teilpolymerschichten sein, wenn beispielsweise eine erste Teilpolymerschicht als Primer aufgetragen wird.

Vorzugsweise weist die Polymerschicht einen Weißgrad in einem Bereich von 0 bis 20 auf. Ganz besonders bevorzugt ist die Polymerschicht schwarz, dunkelgrau oder anthrazit. Alternativ bevorzugt kann die Polymerschicht auch in dem Farbton der Steinschicht eingefärbt sein. Der Weißgrad kann nach DIN ISO 2470-2 beispielsweise mit dem Gerät Weißgrad-Messgerät PCE-WSB 1 gemessen werden. Dadurch, dass die Polymerschicht sehr dunkel ist bzw. sogar schwarz ist, ist die Polymerschicht nicht lichtdurchlässig und Defekte auf der Stein- bzw. Schieferoberfläche fallen nicht leicht auf. Die Polymerschicht kann für bestimmte Anwendungen aber auch lichtdurchlässig gestaltet sein.

Die Dichte der Polymerschicht liegt vorzugsweise in einem Bereich von 1,0 bis 2,2 g/cm³ und kann beispielsweise nach DIN 53479 gemessen werden.

Die Shore D Härte der Polymerschicht liegt vorzugsweise in einem Bereich von 60 bis 100 und kann beispielsweise nach DIN 53505 gemessen werden.

Die Viskosität des unausgehärteten Harzes für die Polymerschicht liegt vorzugsweise in einem Bereich von 0,5 bis 2000 mPa·s. Dies hat den Vorteil, dass das Harz dann mittels Sprühauftrag aufgetragen werden kann.

Vorzugsweise enthält das unausgehärtete Harz zum Erhalt der Polymerschicht einen Katalysator beispielsweise zur Einstellung der Aushärtezeit. Der Katalysator wird vorzugsweise einer Polyolkomponente zugesetzt. Dadurch kann die Aushärtezeit besonders leicht eingestellt werden.

Die Polymerschicht beziehungsweise das nicht ausgehärtete Polymerharz enthält beispielsweise auch Zuschlagstoffe wie Füllstoffe und/oder Brandschutzmittel. Die Zuschlagstoffe können insgesamt in einem Bereich von 1 bis 75 Gew.% enthalten sein. Die Brandschutzmittel. können anorganisch sein (beispielsweise Metallhydroxid wie Aluminiumhydroxid oder Perlit). Die Brandschutzmittel. können in einem Bereich von 20 bis 75 Gew.%, besonders bevorzugt 40 bis 70 Gew.%, enthalten sein. Die Brandschutzmittel können fest oder flüssig sein. Dies hat den Vorteil, dass das Dünnsteinerzeugnis dann beispielsweise auch für die Verkleidung von Fassaden eingesetzt werden kann.

### Fasern

Die Polymerschicht kann Fasern enthalten. Die Fasern können lose Fasern sein oder als Fasergebilde vorliegen. Die losen Fasern können Endlosfasern oder auch Faserabschnitte sein. Die Faserabschnitte können eine durchschnittliche Länge im Median im Bereich von 0,1bis 10 cm aufweisen. Die Fasern können in der Polymerschicht in einem Bereich von 0,1 bis 30 Gew.% enthalten sein. Das Material der Fasern kann ausgewählt sein aus der Gruppe Glasfasern, Aramidfasern, Carbonfasern, Steinfasern, und/oder Metallfasern. Der Faserdurchmesser kann im Median vorzugsweise in einem Bereich von 3 bis 50 µm liegen.

Das Fasergebilde kann auch ein Gewebe und/oder eine Matte sein. Dadurch kann es eine gute und gleichmäßige Durchdringung mit dem Harz und einen definierten Harzauftrag geben. Daher ist das Fasergebilde vorzugsweise auch kein Wirrvlies oder Wirrfasergelege.

Alternativ kann die Polymerschicht auch keine Fasern enthalten.

Die Fasern bestehen vorzugsweise aus anorganischem Material und ganz besonders bevorzugt aus Glas. Dadurch können besonders gute mechanische Kennwerte des erfindungsgemäßen Erzeugnisses und eine besonders gute Brandfestigkeit erreicht werden. Alternativ können die Fasern auch aus organischem Material wie beispielsweise Zellulose oder Baumwolle bestehen.

Der Abstand zwischen dem Fasergebilde und der Steinschicht liegt vorzugsweise in einem Bereich von 0,05 bis 0,7 mm. Das Fasergebilde berührt die Steinschicht vorzugsweise nicht. Dadurch kann besonders leicht vermieden werden, dass das Gewebe durch die dünne Steinschicht sichtbar ist.

Vorzugsweise ist das Fasergebilde hinter der Rückseite der Steinschicht angeordnet. Besonders bevorzugt ist das Fasergebilde nämlich in der Polymerschicht eingebettet.

### Weitere Ausführungsformen

In einer weiteren Ausführungsform wird die der Erfindung zu Grunde liegende Aufgabe durch ein Verfahren zur Herstellung des erfindungsgemäßen Dünnsteinerzeugnisses gelöst, bei dem wenigstens folgende Schritte ausgeführt werden:
a) Sicherstellen einer Rautiefe Rz einer Steinoberfläche gemessen nach DIN EN ISO 4287 in einem Bereich von 2 bis 2000 µm,
b) Auftragen eines noch nicht ausgehärteten Polymerharzes auf die Steinoberfläche,
c) Aushärten des Polymerharzes,
d) Abziehen des ausgehärteten Polymerharzes von der Steinoberfläche, wobei eine mit dem ausgehärteten Polymerharz verklebte Steinschicht von der Steinoberfläche mit abgezogen wird und so das Dünnsteinerzeugnis entsteht.

Der Stein kann vorzugsweise Druckschiefer (beispielsweise Dachschiefer), Massenschiefer (beispielsweise Buntschiefer), Glimmerschiefer, Quarzit, Sandstein oder Marmor sein. Vorzugsweise handelt es sich daher bei dem Dünnsteinerzeugnis um ein Dünnsteinerzeugnis, der Steinoberfläche um eine Schieferoberfläche und bei der Steinschicht um eine Steinschicht.

Oft ist es so, dass die Steinoberfläche gerade beispielsweise bei Schiefer eine Rautiefe von > 2000 µm oder auch < 2 µm (bei geschliffenem Schiefer) aufweist. Um die eingangs erwähnten Fehler in der Produktion zu minimieren, muss vor dem Auftrag des Polymerharzes sichergestellt werden, dass die Rautiefe in dem erfindungsgemäße Bereich liegt.

Um die erfindungsgemäße Rautiefe sicherzustellen, kann es vorteilhaft sein, dass die Steinoberfläche zunächst soweit abgetragen (z.B. abgeschliffen) wird, dass die erfindungsgemäße Rautiefe in jedem Fall erreicht ist.

Das Polymerharz kann die oben beschriebenen Fasern enthalten.

Vorzugsweise ein Schritt wie das erneute Auftragen eines noch nicht ausgehärteten Polymerharzes nach Schritt b) durchgeführt werden. Dieser Schritt kann beispielsweise auch nach dem Auflegen eines Fasergebildes auf das aufgetragene Polymerharz durchgeführt werden.

Schritt d) wird vorzugsweise über eine Trommel oder Walze durchgeführt. Dafür wird das ausgehärtete Polymerharz mit dem Fasergebilde vorzugsweise über die gesamte Breite an einer der vier Kanten in einer Haltevorrichtung der Walze oder Trommel befestigt und dann durch Abrollen der Walze oder Trommel abgezogen. Die Haltevorrichtung kann beispielsweise ein Klemmspalt sein.

Vorzugsweise wird vor Schritt d) und besonders bevorzugt vor Schritt b) ein Greifstreifen (oder auch Abzugshilfe) an einer Kante eingebracht. Der Greifstreifen dient dann dazu, dass die Haltevorrichtung diesen Greifstreifen nach der Aushärtung greifen kann und dann das Dünnsteinerzeugnis von der Steinoberfläche abziehen kann. Beispielsweise kann ein Greifstreifen aus dem mit Polymerharz bedeckten Bereich herausstehen. Insbesondere ist der Greifstreifen über wenigstens 80% der Länge einer Kante vorgesehen. Der Greifstreifen kann 1 bis 20 cm breit sein. Der Greifstreifen kann aus einem Gewebe bestehen.

Schritt d) findet vorzugsweise bei einer Temperatur der Polymerschicht in einem Bereich von 5 bis 35 °C statt. Es kann also beispielsweise nötig sein, die Polymerschicht zunächst vor dem Abziehen abzukühlen. Dies kann beispielsweise mit kalter Luft geschehen. Wenn die Temperatur oberhalb dieses Bereiches liegt, kann es zu Delamination der Schichten bzw. Teilschichten kommen.

In Schritt d) wird die Steinschicht vorzugsweise mechanisch und besonders bevorzugt nicht chemisch von der Steinoberfläche gelöst. Dies ist beispielsweise dadurch möglich, dass ein Polymer eingesetzt wird, das sich in der Oberflächenstruktur des Steins verkrallen kann.

In den Schritten b) oder dem erneuten Auftrag wird das nicht ausgehärtete Polymerharz vorzugsweise mit einer Temperatur oberhalb der Raumtemperatur, besonders bevorzugt in einem Bereich von 40 bis 100 °C, eingesetzt. Die Viskosität des Polymerharzes wird durch den Wärmeeintrag stark herabgesetzt wodurch sich die Verarbeitungseigenschaften ändern. Das Fasergebilde wird deutlich besser getränkt und eingearbeitete Luftblasen können leichter entweichen.

Die Menge an aufgetragenem Harz in den Schritten b) oder dem erneuten Auftrag weicht vorzugsweise voneinander 0 bis 100% ab. Es wird also vorzugsweise in einem der Auftragsschritte maximal doppelt so viel Harz wie in dem anderen Auftragsschritt aufgetragen.

Vorzugsweise ist die Steinoberfläche eine Schieferplatte. Besonders bevorzugt wird die Steinplatte zumindest auf deren Oberfläche vor Durchführung des Schrittes b) auf eine Temperatur oberhalb der Raumtemperatur, besonders bevorzugt in einem Bereich von 40 bis 100 °C, erwärmt. Vorzugsweise wird zum Rand der Steinoberfläche ein Rand, eine Breite in einem Bereich von 1 bis 15 cm gelassen. Die Steinplatte hat vorzugsweise eine Dicke in einem Bereich von 1 bis 20 cm.

Vorzugsweise wird das Polymerharz in Schritt b) und/oder bei dem erneuten Auftrag mittels Sprühen und ganz besonders bevorzugt durch luftloses Sprühen aufgetragen. Sprühen hat den Vorteil, dass ein besonders gleichmäßiger Auftrag möglich ist. Luftloses Sprühen hat den Vorteil, dass weniger Gasblasen in die aufgetragene Schicht eingelagert werden.

Vorzugsweise wird das Polymerharz u.a. aus Polyol und Isocyanat gebildet. Diese Komponenten werden vorzugsweise erst unmittelbar vor dem Auftrag gemischt. Beispielsweise befindet sich ein Mischkopf unmittelbar vor der Düse oder die Düse ist in den Mischkopf integriert.

Zwischen Schritt b) und c) wird vorzugsweise solange gewartet, bis das Harz angeliert ist, besonders bevorzugt ein Vernetzungsgrad von wenigstens 0,1% erreicht ist.

Zwischen den Schritten b) und d) liegt vorzugsweise ein Zeitraum von 1 bis 120 Minuten, bevorzugt ein Zeitraum von 10 bis 60 Minuten. In den bisher bekannten vergleichbaren Verfahren wurde üblicherweise ein Tag gewartet, bevor die Steinschicht abgezogen wurde.

Schritt c) wird vorzugsweise bei Raumtemperatur durchgeführt. Der Schritt c) kann aber auch zumindest teilweise in einem Ofen durchgeführt werden. Hierbei wird die Temperatur des Ofens beispielsweise auf eine Temperatur in einem Bereich von 60 bis 100 °C eingestellt.

Nach Schritt c) wird die mit Polymer beschichtete Steinplatte beispielsweise getempert. Diese Temperung kann in einem Ofen stattfinden. Im Ofen kann dafür eine Temperatur in einem Bereich von 60 bis 100 °C eingestellt sein. Die Temperung kann über einen Zeitraum von 5 bis 60 Minuten durchgeführt werden.

Vorzugsweise wird in Schritt a) und/oder b) eine spaltraue Schieferoberfläche eingesetzt. Ganz besonders bevorzugt ist die Schieferoberfläche nicht geschliffen.

Vorzugsweise wird das Verfahren kontinuierlich durchgeführt.

Um die Gesamtdicke des erfindungsgemäßen Dünnsteinerzeugnisses zu verringern, kann das ausgehärtete Polymerharz anschließend an die Aushärtung abgeschliffen werden. Beispielsweise kann die Dicke der Polymerschicht durch das Abschleifen um eine Dicke in einem Bereich von 10 bis 200 µm reduziert werden. Die Dicke der Polymerschicht kann beispielsweise auf eine Dicke von 200 µm reduziert werden.

In einer weiteren Ausführungsform wird die der Erfindung zu Grunde liegende Aufgabe durch die Verwendung des erfindungsgemäßen Dünnsteinerzeugnisses für Fahrzeuginnenverkleidung, Fassadenverkleidung, Wohnraumverkleidung, dekorative Gebrauchs- Gestaltungsgegenstände, und als Kunststoff/Holzfurnierersatz.

### Ausführungsbeispiel

Als Harz für die Polymerschicht wurde PU NEUKADUR PN 9712 2-K-Polyurethan-Klebstoff der Firma Altropol Kunststoff GmbH enthaltend 5 Gew.% 5cm lange Glasfaserabschnitte (Faserdurchmesser im Median 20 µm) eingesetzt. Eine Schieferplatte mit den Abmaßen 125 cm x 60 cm und einer Rautiefe von 1 mm wurde mit dem Harz beschichtet und erfuhr nach dem Auftrag Strahlungswärme von 40° C in ca. 70 cm Entfernung über der Platte befindlichen Heizstrahlern. Vor dem Beschichten wurde auf eine Kante über die gesamte Breite der Kante ein 5 cm breiter Glasgewebestreifen so aufgelegt, dass er zur Hälfte mit beschichtet wurde und die andere Hälfte aus der Beschichtung herausstand Die Oberflächentemperatur der Schieferplatte wurde maximal auf 80 bis 100°C eingestellt. Es wurde abgewartet bis die Polymerschicht klopffest ausgehärtet war. Danach erfolgte der Abzug des Furniers von der Schieferplatte. Der Abzug des Furniers wurde bei einer Oberflächentemperatur von < 35°C durchgeführt, indem die gesamte Oberkante des Schichtverbundes der Polymerschicht mit Hilfe des Glasfasergewebestreifens in einem Klemmspalt einer Walze festgeklemmt wurde und dann die Walze durch Abrollen langsam und vorsichtig das fertige Dünnsteinerzeugnis mit einer abgezogenen Steinschicht erzeugte.

Der zeitliche Ablauf war wie folgt:
- Auftrag des Harzes
- Aushärtung bei etwa 40 °C Temperatur für etwa 10 Minuten
- Tempern bei etwa 80°C Oberflächentemperatur für etwa 30 Minuten
- einige Stunden ruhen lassen
- Abziehen

## Patentansprüche

1. Biegsames Dünnsteinerzeugnis mit einer außenliegenden Steinschicht, die eine Dicke im Median in einem Bereich von 2 bis 600 µm aufweist, und einer daran angrenzenden Polymerschicht, wobei die Rautiefe Rz der Oberfläche der Steinschicht gemessen nach DIN EN ISO 4287 in einem Bereich von 2 bis 2000 µm liegt, wobei der Stein Druckschiefer, Massenschiefer, Glimmerschiefer, Quarzit, Sandstein oder Marmor ist.

2. Dünnsteinerzeugnis gemäß Anspruch 1, **dadurch gekennzeichnet, dass** die Polymerschicht 0,1 bis 30 Gew.% Faserabschnitte enthält.

3. Dünnsteinerzeugnis gemäß einem der vorhergehenden Ansprüche, **dadurch gekennzeichnet, dass** die Polymerschicht Polyasparaginsäureester und/oder Polyharnstoff enthält.

4. Dünnsteinerzeugnis gemäß einem der vorhergehenden Ansprüche, **dadurch gekennzeichnet, dass** Dünnsteinerzeugnis auf einem Träger angeordnet ist, wobei das Material des Trägers Stahl, Kunststoff, Multiplex beziehungsweise Sperrholz, Faserzement, Aluminium, Glasschaum, Holzfaserzement und/oder Glas ist.

5. Dünnsteinerzeugnis gemäß einem der vorhergehenden Ansprüche, **dadurch gekennzeichnet, dass** die Steinschicht eine Schieferschicht ist und der Winkel zwischen Schieferung und Schichtung in einem Bereich von 2 bis 90°, ganz besonders bevorzugt in einem Bereich von 5 bis 30°, liegt.

6. Dünnsteinerzeugnis gemäß einem der vorhergehenden Ansprüche, **dadurch gekennzeichnet, dass** die Polymerschicht Brandschutzmittel, in einem Bereich von 20 bis 75 Gew.% enthält..

7. Dünnsteinerzeugnis gemäß einem der vorhergehenden Ansprüche, **dadurch gekennzeichnet, dass** die Polymerschicht einen Weißgrad gemessen nach DIN ISO 2470-2 in einem Bereich von 0 bis 20 aufweist.

8. Verfahren zur Herstellung eines Dünnsteinerzeugnisses gemäß einem der Ansprüche 1 bis 7, bei dem wenigstens folgende Schritte ausgeführt werden:
a. Sicherstellen einer Rautiefe Rz einer Steinoberfläche gemessen nach DIN EN ISO 4287 in einem Bereich von 20 bis 2000 µm,
b. Auftragen eines noch nicht ausgehärteten Polymerharzes auf die Steinoberfläche,
c. Aushärten des Polymerharzes,
d. Abziehen des ausgehärteten Polymerharzes von der Steinoberfläche, wobei eine mit dem ausgehärteten Polymerharz verklebte Steinschicht von der Steinoberfläche mit abgezogen wird und so das Dünnsteinerzeugnis entsteht.

9. Verfahren gemäß Anspruch 8, **dadurch gekennzeichnet, dass** vor Schritt d) ein Greifstreifen an einer Kante eingebracht wird.

10. Verfahren gemäß Anspruch 8 oder 9, **dadurch gekennzeichnet, dass** das ausgehärtete Polymerharz anschließend an die Aushärtung abgeschliffen wird.

11. Verwendung des Dünnsteinerzeugnisses gemäß einem der Ansprüche 1 bis 7, für Fahrzeuginnenverkleidung, Fassadenverkleidung, Wohnraumverkleidung, dekorative Gebrauchs-Gestaltungsgegenstände, und als Kunststoff- oder Holzfurnierersatz.

## Claims

1. A flexible thin stone product with an external stone layer having a median thickness in a range from 2 to 600 µm and an adjacent polymer layer, wherein the surface roughness Rz of the stone layer surface is in a range from 2 to 2000 µm when measured according to DIN EN ISO 4287, wherein the stone is slate in which the cleavage and the bedding form a definite angle, slate in which the cleavage and the bedding are orientated parallel, mica schist, quartzite, sandstone or marble.

2. The thin stone product according to claim 1, **characterised in that** the polymer layer contains from 0.1 to 30% by weight of fibre sections.

3. The thin stone product according to any one of the preceding claims, **characterised in that** the polymer layer contains polyaspartic esters and/or polyurea.

4. The thin stone product according to any one of the preceding claims, **characterised in that** the thin stone product is arranged on a support, wherein the support material is steel, plastic, multiplex or plywood, fibre cement, aluminium, glass foam, wood fibre concrete and/or glass.

5. The thin stone product according to any one of the preceding claims, **characterised in that** the stone layer is a shale layer and the angle between the bedding and the cleavage is in a range from 2 to 90 degrees, particularly preferably in a range from 5 to 30 degrees.

6. The thin stone product according to any one of the preceding claims, **characterised in that** the polymer layer contains fireproofing agents in a range from 20 to 75% by weight.

7. The thin stone product according to any one of the preceding claims, **characterised in that** the polymer layer has a degree of whiteness in a range from 0 to 20 when measured according to DIN ISO 2470-2.

8. A process for manufacturing a thin stone product according to any one of claims 1 to 7, wherein at least the following steps are performed:
a. ensuring a surface roughness Rz of a stone surface in a range from 20 to 2000 µm when measured according to DIN EN ISO 4287,
b. applying a not yet cured polymer resin to the stone surface,
c. curing the polymer resin,
d. peeling the cured polymer resin from the stone surface, wherein a stone layer adhesively bonded to the cured polymer resin is also peeled from the stone layer, thus forming the thin stone product.

9. The process according to claim 8, **characterised in that** a grip strip is provided at an edge before step d).

10. The process according to claim 8 or 9, **characterised in that** the cured polymer resin is ground off after curing.

11. Use of the thin stone product according to any one of claims 1 to 7 for a vehicle interior lining, facade cladding, interior wall cladding, decorative designed articles of daily use and as plastic or wood veneer replacement.

## Revendications

1. Produit de pierre fine flexible comprenant une couche de pierre externe présentant une épaisseur moyenne dans une plage de 2 à 600 µm et une couche de polymère adjacente à la couche de pierre, dans lequel la profondeur de rugosité Rz de la surface de la couche de pierre mesurée selon DIN EN ISO 4287 est comprise dans une plage de 2 à 2000 µm, dans lequel la pierre est du schiste à clivage transversal à la stratification, du schiste à clivage parallèle à la stratification, du micaschiste, de la quartzite, du grès ou du marbre.

2. Produit de pierre fine selon la revendication 1, **caractérisé en ce que** la couche de polymère contient de 0,1 à 30% en poids de tronçons de fibres.

3. Produit de pierre fine selon l'une quelconque des revendications précédentes, **caractérisé en ce que** la couche de polymère contient du ester polyaspartique et/ou de la polyurée.

4. Produit de pierre fine selon l'une quelconque des revendications précédentes, **caractérisé en ce que** le produit de pierre est agencé sur un support, dans lequel le matériau du support est l'acier, le plastique, le bois multiplis voire contreplaqué, le fibre-ciment, l'aluminium, la mousse de verre, les fibres de bois liées au ciment et/ou le verre.

5. Produit de pierre fine selon l'une quelconque des revendications précédentes, **caractérisé en ce que** la couche de pierre est une couche d'ardoise et l'angle entre schistosité et stratification est compris dans une plage de 2° à 90°, de préférence particulière dans une plage de 5° à 30°.

6. Produit de pierre fine selon l'une quelconque des revendications précédentes, **caractérisé en ce que** la couche de polymère contient du retardateur de flamme dans une plage de 20 à 75% en poids.

7. Produit de pierre fine selon l'une quelconque des revendications précédentes, **caractérisé en ce que** la couche de polymère présente un degré de blancheur mesuré selon DIN ISO 2470-2 dans une plage de 0 à 20.

8. Procédé pour la fabrication d'un produit de pierre fine selon l'une quelconque des revendications 1 à 7, dans lequel au moins les étapes suivantes sont effectuées :
a. assurance d'une profondeur de rugosité Rz d'une surface de pierre mesurée selon DIN EN ISO 4287 comprise dans une plage de 20 à 2000 µm,
b. dépôt d'une résine de polymère pas encore durcie sur la surface de pierre,
c. durcissement de la résine de polymère,
d. enlèvement de la résine de polymère durcie de la surface de pierre, une couche de pierre collée avec la résine de polymère durcie étant enlevée avec de la surface de pierre de sorte que le produit de pierre fine soit produit.

9. Procédé selon la revendication 8, **caractérisé en ce que** avant l'étape d) une bande de préhension est apportée à un bord.

10. Procédé selon la revendication 8 ou la revendication 9, **caractérisé en ce que** la résine de polymère durcie est abrasée après le durcissement.

11. Utilisation du produit de pierre fine selon l'une quelconque des revendications 1 à 7 pour le revêtement interne d'automobiles, le revêtement de façades, le revêtement de pièces d'habitation, des objets décoratifs d'usage courant et en tant que substitut de placage en plastique ou en bois.
